# EUROPEAN PATENT APPLICATION

(11) **EP 0 809 234 A1**
(43) Date of publication of application: **26.11.1997**
(21) Application number: 97301836.9
(22) Date of filing: 19.03.1997
(51) Int. Cl.: G09G 5/00

(54) **PC-controlled multimedia system and methods using the same**

(30) Priority: 22.05.1996 US 651457
(71) Applicant: CIRRUS LOGIC, INC., Fremont, CA 94538-6423 (US)
(72) Inventor: Taylor, Ronald T., Grapevine, Texas 76051 (US)
(74) Representative: Cross, Rupert Edward Blount

(57) **Abstract**

A television unit (110) containing a television display (130), a built-in personal computer (150) and a CD jukebox (140) for storing PC software, video disks and audio CDs. An operator controls the television unit by means of a user interface (120) containing a PC keyboard (124), a TV remote control keypad 126, and a joystick control or notepad (128). The user interface communicates with the television unit via a wireless infrared link.

## Description

### TECHNICAL FIELD OF THE INVENTION

The present invention relates in general to electronic circuits and systems and, in particular, to a PC-controlled entertainment system and methods using the same.

### BACKGROUND OF THE INVENTION

The type and number of multi-media communication systems for use in the home continue to grow. One of the more important new technologies to develop combines personal computers (PCs) and television and audio equipment into a single multi-media entertainment system. PC manufacturers are introducing PC prototypes that interface with conventional television sets, stereo equipment, video cassette recorders, video disk players and other consumer electronic appliances. At the same time, television (TV) manufacturers are introducing new TV sets, usually large screen models, which incorporate PC·electronics that enable users to run a variety of software programs and use the TV screen and audio speakers as part of the user interface.

Among other things, these advances in TV-PC products provide a user with the ability to view a TV program in the background of a TV screen while running a software application which displays information in a window in the screen foreground, and vice versa. The TV-PC products also allow the user to control through the PC electronics numerous peripheral consumer appliances in order to play video tapes, video disks, audio CDs, video games and the like.

Currently available TV-PC products, however, have a number of substantial disadvantages. Such systems are expensive due to the cost of each of the individual peripheral devices. Also, much of the electronics of the peripheral devices is redundant. For example, a VCR and a video disk player may both contain the same circuitry for outputting a video signal to the TV screen. The same video circuitry is often contained in the PC electronics as well. Similarly, circuitry for generating an audio signal is frequently contained in the VCR, the video disk player, the stereo and the PC. Moreover, the user still faces the traditional task of manually changing video tapes, video disks, CD-ROMs. Furthermore, individual components, particularly older components, may not contain interfaces that are compatible with the other peripheral devices and/or the PC electronics. Another incompatibility problem derives from the fact that some newer consumer entertainment devices produce digital signals for display on the TV screen, while other technologies produce analog signals for display on the TV screen.

There is therefore a need for a single consumer appliance that is capable of retrieving video and audio signals in both digital and analog formats from different types of media storage devices and outputting the requisite video and audio signals for displaying images on a conventional television screen and/or outputting audio through conventional audio speakers. There is a further need for a single consumer appliance capable of accessing a large number of media storage devices, such as video discs and CD-ROMS, without requiring frequent manual assistance from the user.

### SUMMARY OF THE INVENTION

The principles of the present invention are embodied in a display system comprising a display screen, a data processor coupled to the display screen, and a media storage device coupled to and under the control of the data processor for selecting and accessing a plurality of memory media, wherein selected ones of the plurality of memory media contain image data for generating images for display on the display screen.

In another embodiment of the present invention, a multimedia appliance for displaying video images and graphical images is provided comprising a television screen for displaying the video images and the graphical images, a television tuner for receiving an RF signal from an external source and generating therefrom a television signal for display on the television screen, a data processor for receiving commands operable to access selected ones of a plurality of memory media, and a media access device coupled to and under the control of the data processor for storing and accessing the selected memory media and retrieving therefrom video image data and graphical image data for generating the video images and the graphical images and executable code for processing in the data processor.

In still another embodiment of the present invention, a method is provided, in a display system comprising a display screen, a data processor, and a media storage device containing a plurality of memory media, for accessing data stored on selected ones of the plurality of memory media. The method comprises the steps of 1) receiving into the data processor a command operable to select a first one of the plurality of memory media, 2) determining if data stored on the first selected memory media comprises image data or data processor code, 3) if the data stored on the first selected memory media comprises image data, generating from the image data an image signal and transmitting the image signal to the display screen for display thereon, and 4) if the data stored on the first selected memory media comprises data processor code, processing-the executable code in the data processor.

The foregoing has outlined rather broadly the features and technical advantages of the present invention in order that the detailed description of the PC-TV system that follows may be better understood. Additional features and advantages of the PC-TV system will be described hereinafter which form the subject of the claims of the invention. It should be appreciated by those skilled in the art that the conception and the specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

### BRIEF DESCRIPTION OF THE DRAWINGS

Examples of the present invention will be described in conjunction with the accompanying drawings, in which:

FIGURE 1 is a functional block diagram of a consumer appliance embodying the present invention.

FIGURE 2 is a functional block diagram of a processing system for controlling a consumer appliance in accordance with embodiments of the present invention.

### DETAILED DESCRIPTION OF THE INVENTION

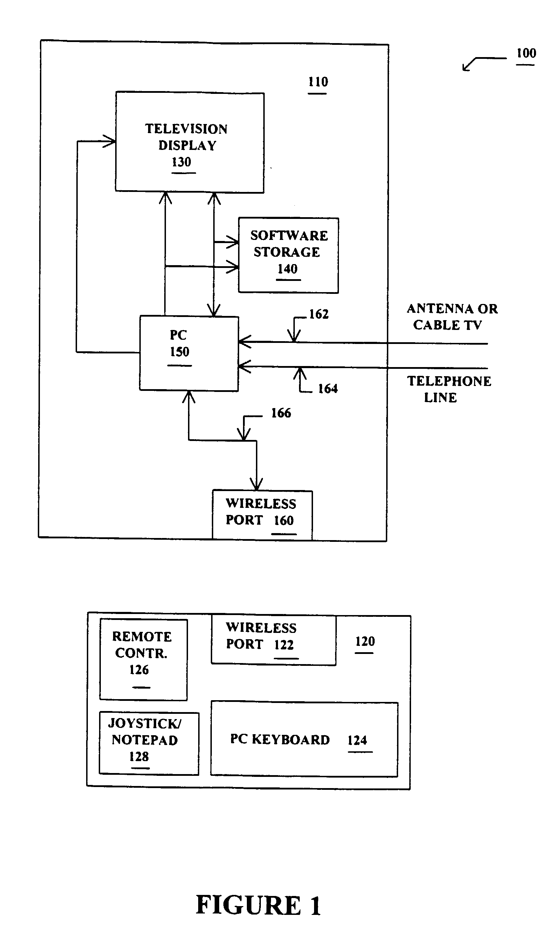

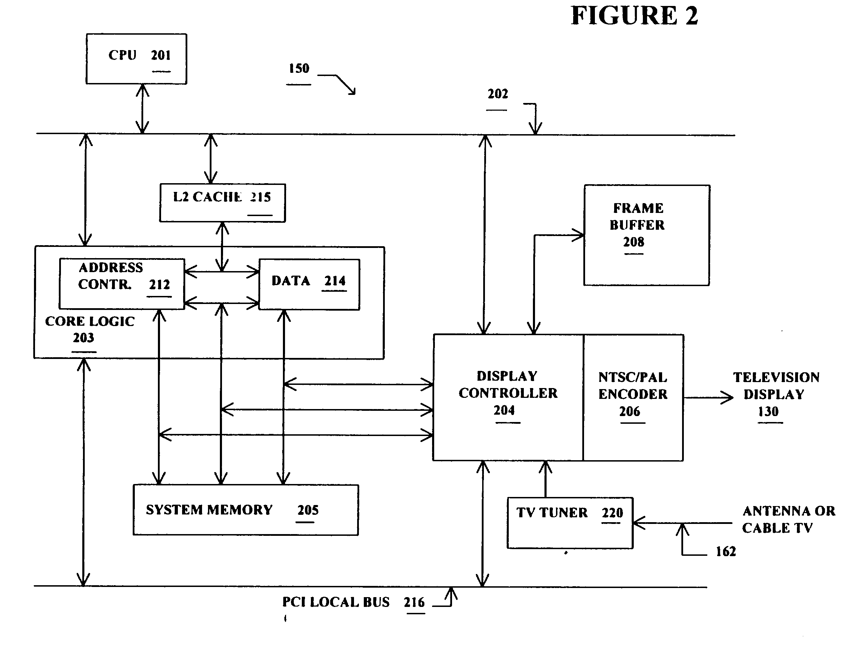

The principles of the present invention and their advantages are best understood by referring to the illustrated embodiment depicted in FIGURES 1 and 2 of the drawings, in which like numbers designate like parts.

FIGURE 1 is a high level functional block diagram of a PC-TV system 100 in accordance with the principles of the present invention. System 100 includes a television unit 110 and a user interface 120. Television unit 110 comprises television display 130, software storage 140, personal computer (PC) electronics 150, and wireless communication port 160. In a preferred embodiment of the present invention, television display 130 is a large screen TV display, such as a rear projection screen, and includes conventional television tuner circuitry. Additionally, in a preferred embodiment, TV display 130, software storage 140, PC 150 and wireless port 160 are fabricated in a single "cabinet" or other supporting structure or enclosure.

User interface 120 provides wireless communication between a user and television unit 110. User interface 120 preferably comprises wireless port 122, standard PC keyboard 124, TV remote control keypad 126, and optional joystick/notepad control 128. In a preferred embodiment, wireless port 122 and wireless port 160 are optical driver-receivers that provide a high-speed infrared (IR) communication link between television unit 110 and user interface 120. In alternate embodiments of the present invention, user interface 120 may be coupled to television unit 110 via wire cable or fiber optic cable.

When viewing video images generated from data received through an antenna or cable TV line on television display 130, the user can change channels, adjust volume and turn television unit 110 ON and OFF using TV remote control keypad 126 in the conventional manner. When running a software application on PC 150, control information and commands sent by the user are used by PC 150 in television unit 110 to activate display windows on television display 130 and to size and position the windows. The operator may enter data and commands by typing on PC keyboard 124 or by operating joystick control 128. In some embodiments of the present invention, the operator may enter data by writing on notepad 128, which may be substituted for joystick control 128.

PC 150 receives commands and data from the operator by data link 166 to wireless port 160. PC 150 can also relay status data back to user interface 120. PC 150 controls the operations of software storage 140. In a preferred embodiment of the present invention, PC 150 is a conventional PC architecture and is built into television unit 110 in board form without monitor, case or keyboard. In alternate embodiments of the invention, where executing software applications is unnecessary or undesirable, operation of software storage 140 may be controlled by a simpler, less expensive microcontroller in place of PC 150.

FIGURE 2 is a high level functional block diagram of a portion of personal computer (PC) 150. PC 150 includes central processing unit (CPU) 201, CPU local bus 202, core logic 203, display controller 204, system memory 205, NTSC/PAL encoder 206, and frame buffer 208.

CPU 201 is the "master" which controls the overall operation of PC 150. Among other things, CPU 201 performs various data processing functions and determines the content of the graphics data to be displayed on television display 130 in response to user commands and/or the execution of application software. CPU 201 may be, for example, a general purpose microprocessor, such as an Intel Pentium class microprocessor or the like, used in commercial personal computers. CPU 201 communicates with the remainder of PC 150 via CPU local bus 202, which may be, for example, a special bus, or a general bus (common in the industry).

Core logic 203, under the direction of CPU 201, controls the exchange of data, addresses, control signals and instructions between CPU 201, display controller 204, and system memory 205. Core logic 203 may be any one of a number of commercially available core logic chip sets designed for compatibility with the remainder of the system and, in particular, with CPU 201. One or more core logic chips, such as chip 212 in the illustrated system, are typically "address intensive," while one or more core logic chips, such as chip 214 in FIGURE 2, are "data intensive." Address intensive core logic chip 212 generally: interfaces CPU 201 with the address path of CPU bus 202; maintains cache memory, including the cache tags, set associative cache tags and other data necessary to insure cache coherency; performs cache "bus snooping"; generates the control signals required for DRAMs in the system memory or cache; and controls general management transactions. Data intensive chip 214 generally: interfaces CPU 201 with the data path of CPU bus 202; issues cycle completion responses to address chip 212 or CPU 201; arbitrates for the data path of bus 202; and, when necessary, aborts operations if their cycles are incomplete.

CPU 201 can directly communicate with core logic 203 or through an external (L2) cache 215. L2 cache 215 may be, for example, a 256 kilobyte fast SRAM device(s). It should be noted that CPU 201 can also include on-board (L1) cache, typically up to 16 kilobytes.

Display controller 204 may receive data, instructions and/or addresses from CPU 201, either through core logic 203 or directly from CPU 201 via CPU local bus 202. Data, instructions, and addresses are exchanged between display controller 204 and system memory 205 through core logic 203. Furthermore, addresses and instructions may be exchanged between core logic 203 and display controller 204 via a local bus which may be, for example, a PCI local bus. Generally, display controller 204 controls screen refresh, executes a limited number of graphics functions, such as line draw, polygon fill, color space conversion, display data interpolation and zooming, and video streaming, and handles other ministerial chores such as power management. Most importantly, display controller 204 controls the raster of pixel data from frame buffer 208 to television display 130 during screen refresh and interfaces CPU 201 and frame buffer 208 during display data update. Display controller 204 also receives a video image from TV tuner 220, which receives the video signal from an external source on line 162, such as an antenna or a cable TV line.

NTSC/PAL encoder 206 receives digital data from controller 204 and outputs the analog data to drive television display 130 in response. In the illustrated embodiment, NTSC/PAL encoder 206 is integrated with display controller 204 onto a single chip. Depending on the specific implementation of PC 150, NTSC/PAL encoder 206 may also include a color palette, YUV-to-RGB format conversion circuitry, and/or X- and Y- zooming circuitry, to name a few options. Television display 130 is preferably a rear projection TV but may be, for example, a CRT unit, a liquid crystal display, electroluminescent display, plasma display, or any other type of display device which displays images on a screen as a plurality of pixels.

The data paths in PC 150 will vary with each design. For example, PC 150 may be a "64-bit" or "72-bit" system. Assume for discussion purposes that a 64-bit system is chosen. Then, each of the data connections, including the data paths of CPU bus 202 and PCI bus 216, the data paths through core logic 203 to system memory 205 and display controller 204, and the data interconnection between display controller 204 and frame buffer 208, are all 64 bits wide. This would require that four 16-bit DRAM devices be used in parallel. A double-precision word in such a system would contain 128 bits. It should be noted that the address interconnections will vary depending on the size of the memory and such factors as the need to support data byte select and virtual memory operations. In a Pentium processor system, the address portions of CPU bus 202 and PCI bus 216 are typically on the order of 30 bits wide.

Returning to FIGURE 1, software storage 140 is a "jukebox" type system capable of accessing a large number (preferably 8 or more) of storage media, such as twelve inch (12") laser video disks, audio CDs, digital CD-ROMs for PC software, etc. Such "jukebox" type systems for selecting and changing memory media are known in the art and are commonly seen in commercial audio CD jukeboxes and CD players capable of holding and playing multiple CDs. For example, the operator can execute software applications retrieved from CD-ROMs in software storage 140, watch video retrieved from laser disks or CD-ROMs, or listen to audio CDs retrieved from software storage 140 on the speakers of television unit 110. In a preferred embodiment of the present invention, software storage 140 contains means for reading both analog and digital data stored on the storage media. Some data retrieved from software storage 140, such as an analog video signal, may be sent directly to television display 130. Other data retrieved from software storage 140, such as digital video data in MPEG compressed format, may first be processed by PC 150 before being sent to television display 130.

In addition to operating television display 130 via TV remote control keypad 126, a software package can be run by PC 150 to operate all of PC-TV system 100 by means of a "menu" of commands/options that are displayed on television display 130. For example, the operator can use PC keyboard 124 and joystick control 128 to display on the TV screen television programs received on line 162 from the cable TV system or from an antenna, prerecorded material from software storage 140, or PC applications resident in PC 150 or retrieved from software storage 140. The operator may use the "split-screen" or "picture-in-picture" (PIP) functions of television display 130 to display a PC window in one portion of the screen, while a video picture is displayed in the background.

In a preferred embodiment, PC 150 is coupled via modem to telephone line 164 from the public telephone network. The telephone link provides additional functions to television unit 110 that are standard to most personal computers, such as E-mail, Internet access, home shopping, etc. Again, PC 150 displays Internet data and E-mail in a window on television display 130.

Although the present invention and its advantages have been described in detail, it should be understood that various changes, substitutions and alterations can be made herein without departing from the spirit and scope of the invention as defined by the appended claims.

## Claims

1. A display system comprising:
a display screen;
a data processor coupled to said display screen; and
a media storage device coupled to and under the control of said data processor fcr selecting and accessing a plurality of memory media, wherein selected ones of said plurality of memory media contain image data for generating images for display on said display screen.

2. The display system set forth in claim 1 wherein said media storage device further comprises means for reading said image data from said memory media and transmitting a first image signal to said display screen.

3. The display system set forth in claim 2 wherein said video image data are stored in analog format on a disk.

4. The display system set forth in claim 2 wherein said video image data are stored in digital format on a disk.

5. The display system set forth in claim 1 wherein said display system further comprises audio processing circuitry coupled to said media storage device and wherein said selected memory media contain audio signals stored on audio CDs.

6. The display system set forth in claim 1 wherein said video display system further comprises a communication port for receiving data transmitted from an input device.

7. The display system set forth in claim 6 wherein said communication port comprises an optical driver-receiver for transmitting and receiving IR signals.

8. The display system set forth in claim 7 wherein said input device comprises a keyboard.

9. The display system set forth in claim 7 wherein said input device comprises a manually-operated joystick.

10. The display system set forth in claim 7 wherein said input device comprises a television remote control device.

11. The display system set forth in claim 2 wherein said selected memory media contain data for processing in said data processor.

12. The display system set forth in claim 11 wherein said first image signal transmitted by said media storage system is displayed as a first image on said display screen and said data processor displays said processed data on said display screen in a window overlaying said first image.

13. The display system set forth in claim 11 wherein said data processor processes MPEG display data retrieved from said selected memory media and generates therefrom a second video image signal for display on said display screen.

14. The display system set forth in claim 2 further comprising a television tuner for receiving an externally supplied RF video signal and generating therefrom a processed video signal for display on said display screen.

15. The display system set forth in claim 2 wherein said data processor further comprises circuitry for transmitting and receiving data across a telephone line.

16. A multimedia appliance for displaying video images and graphical images comprising:
a television screen for displaying said video images and said graphical images;
a television tuner for receiving an RF signal from an external source and generating therefrom a television signal for display on said television screen;
a data processor for receiving commands operable to access selected ones of a plurality of memory media; and
a media access device coupled to and under the control of said data processor for storing and accessing said selected memory media and retrieving therefrom video image data and graphical image data for generating said video images and said graphical images and executable code for processing in said data processor.

17. The multimedia appliance set forth in claim 16 wherein wherein said media access device further comprises circuitry for generating from said video image data a first video image signal and transmitting said first video image signal to said display screen.

18. The video display system set forth in claim 16 wherein said video image data are stored in analog format on said memory media.

19. The video display system set forth in claim 16 wherein said video image data are stored in digital format on said memory media.

20. In a display system comprising a display screen, a data processor, and a media storage device containing a plurality of memory media, a method of accessing data stored on selected ones of the plurality of memory media, the method comprising the steps of:
receiving into the data processor a command operable to select a first one of the plurality of memory media;
determining if data stored on the first selected memory media comprises image data or data processor code;
if the data stored on the first selected memory media comprises image data, generating from the image data an image signal and transmitting the image signal to the display screen for display thereon; and
if the data stored on the first selected memory media comprises data processor code, processing the executable code in the data processor.

21. The method set forth in claim 20 transmitting a second image signal from the data processor to the display screen for display in a window in the display screen.
